Europäisches Patentamt

European Patent Office

Office européen des brevets

(19)

(11) Veröffentlichungsnummer : **0 070 375**
**B1**

(12) # EUROPÄISCHE PATENTSCHRIFT

(45) Veröffentlichungstag der Patentschrift :
03.04.85

(51) Int. Cl.⁴ : **F 16 C 32/06**

(21) Anmeldenummer : **82104665.3**

(22) Anmeldetag : **27.05.82**

(54) **Hydrostatisches Lager.**

(30) Priorität : **16.07.81 DE 3128186**

(43) Veröffentlichungstag der Anmeldung :
**26.01.83 Patentblatt 83/04**

(45) Bekanntmachung des Hinweises auf die Patenterteilung : **03.04.85 Patentblatt 85/14**

(84) Benannte Vertragsstaaten :
**AT BE DE FR GB IT SE**

(56) Entgegenhaltungen :
**DE-A- 2 901 064**
**DE-C- 2 039 720**
**US-A- 2 578 711**
**US-A- 3 053 583**
**US-A- 3 781 070**

(73) Patentinhaber : **Krupp Polysius AG**
**Graf-Galen-Strasse 17**
**D-4720 Beckum (DE)**

(72) Erfinder : **Heinemann, Otto, Ing. grad.**
**Galileistrasse 8**
**D-4722 Ennigerloh (DE)**
Erfinder : **Heiringhoff, Burkhard, Ing. grad.**
**Theodor-Heuss-Strasse 19**
**D-4740 Oelde (DE)**
Erfinder : **Krumme, Helmut**
**Königstrasse 29**
**D-4724 Wadersloh (DE)**
Erfinder : **Schössler, Werner, Ing. grad.**
**Zeppelinstrasse 22**
**D-4730 Ahlen (DE)**
Erfinder : **Lücke, Helmut, Ing. Grad.**
**Zum Igelsbusch 2**
**D-4720 Beckum (DE)**

(74) Vertreter : **Tetzner, Volkmar, Dr.-Ing. Dr. Jur.**
**Van-Gogh-Strasse 3**
**D-8000 München 71 (DE)**

**Beschreibung**

Die Erfindung betrifft ein hydrostatisches Lager mit einem taumelbeweglich abgestützten Lagersegment, dessen Lauffläche mehrere symmetrisch zum Zentrum der Lauffläche angeordnete, mit Drucköl gespeiste, in sich geschlossene Kanäle aufweist.

Hydrostatische Lager werden vor allem zur radialen und axialen Lagerung schwerer rotierender Maschinenteile verwendet. Der tragende Ölfilm wird dabei durch Drucköl erzeugt, das den in der Lauffläche des hydrostatischen Lagers angeordneten Kanälen zugeführt wird.

Bei einem bekannten hydrostatischen Lager der eingangs genannten Art (DE-C-20 39 720) weist die Lauffläche des Lagersegments vier symmetrisch zum Zentrum angeordnete, sektorförmige Öltaschen auf, die jeweils aus einem etwa dreieckförmigen Kanal und einer von diesem Kanal eingeschlossenen, gleichfalls etwa dreieckförmigen erhabenen Fläche gebildet werden. Die erhabene Fläche jeder dieser sektorförmigen Öltaschen ist dabei wesentlich kleiner als die Fläche des sie umschließenden Kanales.

Ein wesentlicher Nachteil dieses bekannten hydrostatischen Lagers liegt in den schlechten Notlauf-Eigenschaften bei einem Ausfall der Druckölversorgung. Bedingt sowohl durch die verhältnismäßig geringe Fläche, als auch vor allem durch die Form und Anordnung der von den Kanälen umschlossenen erhabenen Flächen bildet sich bei dem bekannten Lager bei einem Ausfall der Druckölversorgung kein ausreichender Schmierfilm zwischen dem gelagerten Element und der Lauffläche des Lagersegmentes aus. Es kommt daher zu starker metallischer Reibung mit allen daraus und aus der hohen Flächenpressung resultierenden Nachteilen.

Der Erfindung liegt daher die Aufgabe zugrunde, unter Vermeidung dieser Nachteile ein hydrostatisches Lager der eingangs genannten Art so auszubilden, daß sich besonders gute Notlauf-Eigenschaften bei niedriger Flächenpressung ergeben.

Diese Aufgabe wird erfindungsgemäß durch folgende Merkmale gelöst :

a) Die von den einzelnen Kanälen umschlossenen erhabenen Flächen besitzen über ihre ganze Länge (betrachtet in Laufrichtung des gelagerten Teiles) eine gleichbleibende Breite (quer zur Laufrichtung) ;

b) die Länge (in Laufrichtung) dieser erhabenen Flächen ist mindestens so groß wie ihre Breite ;

c) die erhabenen Flächen sind mindestens ebenso groß wie die Flächen der sie umschließenden Kanäle ;

d) die Gesamtfläche der Kanäle beträgt höchstens 25 % der gesamten Lauffläche des Lagersegmentes.

Durch die erfindungsgemäße Gestaltung, Bemessung und Anordnung der Kanäle sowie der von ihnen umschlossenen erhabenen Flächen wird beim Ausfall der Druckölversorgung die Ausbildung eines tragenden Schmierölfilmes auf einer verhältnismäßig großen Fläche des Lagersegments wesentlich begünstigt. So gewährleistet insbesondere die Gestaltung der erhabenen Flächen innerhalb der sie umschließenden Kanäle, daß sich auch über diesem Teil der Lauffläche des Lagersegments bei einem Ausfall der Druckölversorgung ein ausreichender hydrodynamischer « Druckberg » aufbaut, der einen wesentlichen Teil der Lagerkräfte aufnimmt.

Zweckmäßige Ausgestaltungen der Erfindung sind Gegenstand der Unteransprüche und werden im Zusammenhang mit der Beschreibung eines in der Zeichnung veranschaulichten Ausführungsbeispieles näher erläutert.

In der Zeichnung zeigen

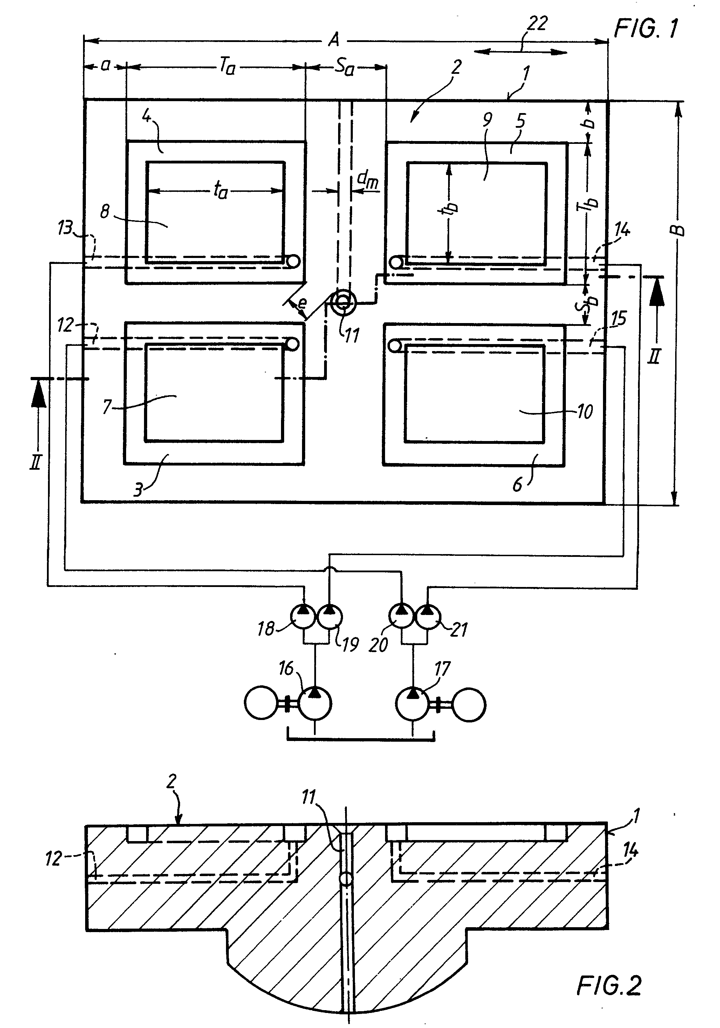

Figur 1 eine Aufsicht auf die Lauffläche eines erfindungsgemäß ausgestalteten hydrostatischen Lagers (mit schematisch angedeuteten Einrichtungen zur Druckölversorgung),

Figur 2 einen Schnitt längs der Linie II-II der Fig. 1.

Von dem hydrostatischen Lager ist in der Zeichnung lediglich das taumelbeweglich abgestützte Lagersegment 1 dargestellt. Seine Lauffläche 2 enthält mehrere symmetrisch zum Zentrum der Lauffläche angeordnete, mit Drucköl gespeiste, in sich geschlossene Kanäle 3, 4, 5, 6, die jeweils eine rechteckförmige erhabene Fläche 7, 8, 9 bzw. 10 einschließen.

Im Zentrum der Lauffläche ist eine Bohrung 11 vorgesehen. Weiterhin münden Bohrungen 12, 13, 14 bzw. 15 in die einzelnen Kanäle 3 bis 6 ein. Diese letztgenannten Kanäle 12 bis 15 dienen zur Druckölversorgung der Kanäle 3 bis 6. Über die im Zentrum der Lauffläche vorgesehene Bohrung 11 wird dagegen ein Druckwert abgenommen, der bei einem Mehrsegmentlager zur Steuerung von Zusatz-Lagersegmenten dienen kann. Der über diese Bohrung 11 vom Zentrum der Lauffläche abgegriffene Öldruck kann außerdem der Unterseite des Lagersegmentes 1 zugeführt und zur hydraulischen Druckentlastung verwendet werden.

Die Ölversorgung der Kanäle 3 bis 6 erfolgt über zwei Hauptpumpen 16, 17 und zwei Ölstromteilen mit den Flächen 18, 19, 20, 21. Dabei werden von der Hauptpumpe 16 die sich diagonal einander gegenüberliegenden Kanäle 4 und 6 gespeist, während die Hauptpumpe 17 die gleichfalls diagonal zueinander angeordneten Kanäle 3 und 5 versorgt. Dadurch wird auch beim Ausfall einer der beiden Hauptpumpen eine annähernd symmetrische Versorgung der Lauffläche des Lagersegments mit Drucköl gewährleistet und einer Kipptendenz entgegengewirkt.

Der nicht dargestellte, gelagerte Teil (beispielsweise eine schwere Trommel) dreht sich in Richtung des Pfeiles 22.

Für die im folgenden erläuterte Bemessung und Anordnung der einzelnen Elemente der Laufläche finden folgende Abkürzungen Verwendung :

A = Länge der Lauffläche in Laufrichtung,
B = Breite der Lauffläche quer zur Laufrichtung,
$T_a$ = Länge der Kanäle in Laufrichtung,
$T_b$ = Länge der Kanäle quer zur Laufrichtung,
a = Abstand der Kanäle von dem quer zur Laufrichtung liegenden Rand der Lauffläche,
b = Abstand der Kanäle von dem parallel zur Laufrichtung liegenden Rand der Lauffläche,
$S_a$ = Abstand benachbarter Kanäle in Laufrichtung,
$S_b$ = Abstand benachbarter Kanäle quer zur Laufrichtung,
$t_a$ = Länge der erhabenen Flächen in Laufrichtung,
$t_b$ = Länge der erhabenen Flächen quer zur Laufrichtung,
$d_m$ = Durchmesser der im Zentrum der Lauffläche vorgesehenen Bohrung,
e = Abstand des Umfanges dieser Bohrung von der benachbarten Ecke der Kanäle.

Für die Erzielung optimaler Notlauf-Eigenschaften (bei Ausfall der Drucköversorgung) haben sich folgende Verhältniswerte als optimal erwiesen :

$A/B = 1,33 ... 1,85$
$(T_a \cdot T_b)/(A/2 \cdot B/2) = 0,38 ... 0,5$
$a/b = 1$
$S_a/a = 1,3 ... 2$
$S_a/S_b = 1,5 ... 2$
$(t_a \cdot t_b)/(T_a \cdot T_b) = 0,51 ... 0,67$
$t_a/t_b = 1,4 ... 2,6$
$4 \cdot (T_a \cdot T_b - t_a \cdot t_b) = (0,18 ... 0,22) A B$
$(d_m \cdot \pi)/e = 1,6 ... 2,6$

## Ansprüche

1. Hydrostatisches Lager mit einem taumelbeweglich abgestützten Lagersegment (1), dessen Lauffläche (2) mehrere symmetrisch zum Zentrum der Lauffläche angeordnete, mit Drucköl gespeiste, in sich geschlossene Kanäle (3, 4, 5, 6) aufweist, gekennzeichnet durch folgende Merkmale :

a) die von den einzelnen Kanälen (3, 4, 5, 6) umschlossenen erhabenen Flächen (7, 8, 9, 10) besitzen über ihre ganze Länge $t_a$, betrachtet in Laufrichtung des gelagerten Teiles, eine gleichbleibende Breite $t_b$ quer zur Laufrichtung ;
b) die Länge $t_a$ in Laufrichtung dieser erhabenen Flächen (7, 8, 9, 10) ist mindestens so groß wie ihre Breite $t_b$ ;
c) die erhabenen Flächen (7, 8, 9, 10) sind mindestens ebenso groß wie die Flächen der sie umschließenden Kanäle (3, 4, 5, 6) ;
d) die Gesamtfläche der Kanäle (3, 4, 5, 6) beträgt höchstens 25 % der gesamten Lauffläche des Lagersegments (1).
2. Lager nach Anspruch 1, dadurch gekennzeichnet, daß die Lauffläche (2) vier jeweils von einem Kanal (3, 4, 5, 6) umschlossene, rechteckförmige erhabene Flächen (7, 8, 9, 10) aufweist.
3. Lager nach Anspruch 2, gekennzeichnet durch ein Verhältnis

$A/B = 1,33 ... 1,85$

wobei
A = Länge der Lauffläche (2) in Laufrichtung,
B = Breite der Lauffläche (2) quer zur Laufrichtung.
4. Lager nach Anspruch 2, gekennzeichnet durch die Verhältnisse

$(T_a \cdot T_b)/(A/2 \cdot B/2) = 0,38 ... 0,5$
$a/b = 1$
$S_a/a = 1,3 ... 2$
$S_a/S_b = 1,5 ... 2$

wobei
A = Länge der Lauffläche in Laufrichtung,
B = Breite der Lauffläche quer zur Laufrichtung,

# 0 070 375

$T_a$ = Länge der Kanäle in Laufrichtung,
$T_b$ = Länge der Kanäle quer zur Laufrichtung,
a = Abstand der Kanäle von dem quer zur Laufrichtung liegenden Rand der Lauffläche,
b = Abstand der Kanäle von dem parallel zur Laufrichtung liegenden Rand der Lauffläche,
$S_a$ = Abstand benachbarter Kanäle in Laufrichtung,
$S_b$ = Abstand benachbarter Kanäle quer zur Laufrichtung.

5. Lager nach Anspruch 2, gekennzeichnet durch die Verhältnisse

$$(t_a \cdot t_b)/(T_a \cdot T_b) = 0{,}51 \ldots 0{,}67$$
$$t_a/t_b = 1{,}4 \ldots 2{,}6$$

wobei

$T_a$ = Länge der Kanäle in Laufrichtung
$T_b$ = Länge der Kanäle quer zur Laufrichtung
$t_a$ = Länge der erhabenen Flächen in Laufrichtung,
$t_b$ = Länge der erhabenen Flächen quer zur Laufrichtung.

6. Lager nach Anspruch 2, dadurch gekennzeichnet, daß die Gesamtfläche der Kanäle 18 bis 22 % der gesamten Lauffläche des Lagersegmentes beträgt.

7. Lager nach Anspruch 2, dadurch gekennzeichnet, daß im Zentrum der Lauffläche (2) eine zur Abnahme eines Druckwertes dienende Bohrung (11) vorgesehen ist, die von den einzelnen Kanälen (3, 4, 5, 6) gleiche Abstände (e) aufweist.

8. Lager nach Anspruch 7, gekennzeichnet durch ein Verhältnis

$$(d_m \cdot \pi)/e = 1{,}5 \ldots 3, \text{ vorzugsweise } 2{,}3 \ldots 2{,}6$$

wobei

$d_m$ = Durchmesser der Bohrung (II),
e = Abstand des Umfanges der Bohrung (II) von der benachbarten Ecke der Kanäle.

9. Lager nach Anspruch 2, dadurch gekennzeichnet, daß jeweils diagonal zum Zentrum der Lauffläche (2) angeordnete Kanäle (z. B. 4 und 6 bzw. 3 und 5) durch eine gesonderte Pumpe (16 bzw. 17) mit Drucköl gespeist sind.

## Claims

1. Hydrostatic bearing with a bearing segment (1) which is supported so as to be capable of tumbling motion, the bearing surface (2) thereof having a plurality of closed channels (3, 4, 5, 6) which are arranged symmetrically relative to the center of the bearing surface and are supplied with oil under pressure, characterised by the following features :

a) the raised surfaces (7, 8, 9, 10) enclosed by the individual channels (3, 4, 5, 6) over their entire length ($t_a$) viewed in the direction of movement of the supported element have a uniform width ($t_b$) at right angles to the direction of movement ;

b) the length ($t_a$) of these raised surfaces (7, 8, 9, 10) in the direction of movement is at least as great as the width ($t_b$) ;

c) the raised surfaces (7, 8, 9, 10) are at least as great as the surfaces of the channels (3, 4, 5, 6) enclosing them ;

d) the total surface of the channels (3, 4, 5, 6) amounts at most to 25 % of the total bearing surface of the bearing segment (1).

2. Bearing according to claim 1, characterised in that the bearing surface (2) comprises four rectangular raised surfaces (7, 8, 9, 10) each enclosed by a channel (3, 4, 5, 6).

3. Bearing according to claim 2, characterised by a relationship

$$A/B = 1{,}33 \ldots 1{,}85$$

with the abbreviations
A = length of the bearing surface (2) in the direction of movement,
B = width of the bearing surface (2) at right angles to the direction of movement.

4. Bearing according to claim 2, characterised by the relationships

$$(T_a \cdot T_b)/(A/2 \cdot B/2) = 0{,}38 \ldots 0{,}5$$
$$a/b = 1$$
$$S_a/a = 1{,}3 \ldots 2$$
$$S_a/S_b = 1{,}5 \ldots 2$$

4

with the abbreviations

A = length of the bearing surface in the direction of movement,

B = width of the bearing surface at right angles to the direction of movement,

$T_a$ = length of the channels in the direction of movement,

$T_b$ = length of the channels at right angles to the direction of movement,

a = distance of the channels from the edge of the bearing surface lying at right angles to the direction of movement,

b = distance of the channels from the edge of the bearing surface lying parallel to the direction of movement,

$S_a$ = distance between adjacent channels in the direction of movement,

$S_b$ = distance between adjacent channels at right angles to the direction of movement.

5. Bearing according to claim 1, characterised by the relationships

$$(t_a \cdot t_b)/(T_a \cdot T_b) = 0{,}51 \ldots 0{,}67$$
$$t_a/t_b = 1{,}4 \ldots 2{,}6$$

with the abbreviations

$T_a$ = length of the channels in the direction of movement,

$T_b$ = length of the channels at right angles to the direction of movement,

$t_a$ = length of the raised surfaces in the direction of movement,

$t_b$ = length of the raised surfaces at right angles to the direction of movement.

6. Bearing according to claim 1, characterised in that the total surface of the channels amount to 18 to 22 % of the total bearing surface of the bearing segment.

7. Bearing according to claim 2, characterised in that a bore (11) which has the same distance (e) from the individual channels (3, 4, 5, 6) is provided in the center of the bearing surface (2) to tap a pressure value.

8. Bearing according to claim 7, characterised by a relationship

$$(d_m \cdot \pi)/e = 1{,}5 \ldots 3, \text{ preferably } 2{,}3 \ldots 2{,}6$$

with the abbreviations

$d_m$ = diameter of the bore (11),

e = distance of the periphery of the bore (11) from the adjacent corner of the channels.

9. Bearing according to claim 2, characterised in that channels (e. g. 4 and 6 or 3 and 5) which are arranged diagonally relative to the center of the bearing surface (2) are supplied with oil under pressure by a separate pump (16 or 17).

**Revendications**

1. Palier hydrostatique comprenant un segment (1) dont l'appui lui autorise des mouvements de mutation et dont la surface de portée (2) comprend plusieurs canaux (3, 4, 5, 6) disposés symétriquement par rapport au centre de la surface de portée, alimentés en huile sous pression et refermés sur eux-mêmes, caractérisé par les particularités suivantes :

a) les surfaces en relief (7, 8, 9, 10) entourées par les différents canaux (3, 4, 5, 6) ont sur la totalité de leur longueur $t_a$, considérée dans la direction du glissement de l'élément supporté, une largeur constante $t_b$ perpendiculairement à la direction du glissement ;

b) la longueur $t_a$, dans la direction du glissement, de ces surfaces en relief (7, 8, 9, 10) est au moins aussi grande que leur largeur $t_b$ ;

c) les surfaces en relief (7, 8, 9, 10) sont au moins aussi grandes que les surfaces des canaux (3, 4, 5, 6) qui les entourent ;

d) la surface totale des canaux (3, 4, 5, 6) correspond au maximum à 25 % de la totalité de la surface de portée du segment (1).

2. Palier selon la revendication 1, caractérisé en ce que la surface de portée (2) comporte quatre surfaces rectangulaires en relief (7, 8, 9, 10), dont chacune est entourée d'un canal (3, 4, 5, 6).

3. Palier selon la revendication 2, caractérisé par un rapport

$$A/B = 1{,}33 \ldots 1{,}85$$

dans lequel

A = longueur de la surface de portée (2) dans la direction du glissement,

B = largeur de la surface de portée (2) perpendiculairement à la surface du glissement.

4. Palier selon la revendication 2, caractérisé par les rapports

$$(T_a \cdot T_b)/(A/2 \cdot B/2) = 0,38 \ldots 0,5$$
$$a/b = 1$$
$$S_a/a = 1,3 \ldots 2$$
$$S_a/S_b = 1,5 \ldots 2$$

dans lesquels

A = longueur de la surface de portée dans la direction du glissement,

B = largeur de la surface de portée perpendiculairement à la direction du glissement,

$T_a$ = longueur des canaux dans la direction du glissement,

$T_b$ = longueur des canaux perpendiculairement à la direction du glissement,

a = distance des canaux au bord de la surface de portée qui est perpendiculaire à la direction du glissement,

b = distance des canaux au bord de la surface de portée qui est parallèle à la direction du glissement,

$S_a$ = distance séparant les canaux voisins dans la direction du glissement,

$S_b$ = distance séparant les canaux voisins perpendiculairement à la direction du glissement.

5. Palier selon la revendication 2, caractérisé par les rapports

$$(t_a \cdot t_b)/(T_a \cdot T_b) = 0,51 \ldots 0,67$$
$$t_a/t_b = 1,4 \ldots 2,6$$

dans lesquels

$T_a$ = longueur des canaux dans la direction du glissement,

$T_b$ = longueur des canaux perpendiculairement à la direction du glissement,

$t_a$ = longueur des surfaces en relief dans la direction du glissement,

$t_b$ = longueur des surfaces en relief perpendiculairement à la direction du glissement.

6. Palier selon la revendication 2, caractérisé en ce que la surface totale des canaux correspond de 18 à 22 % de la totalité de la surface de portée du segment.

7. Palier selon la revendication 2, caractérisé en ce qu'un trou (11) prévu au centre de la surface de portée (2) et destiné à déceler la valeur d'une pression est à la même distance (e) de chacun des différents canaux (3, 4, 5, 6).

8. Palier selon la revendication 7, caractérisé par un rapport

$$(d_m \cdot \pi)/e = 1,5 \ldots 3, \text{ de préférence } 2,3 \ldots 2,6,$$

dans lequel

$d_m$ = diamètre du trou (11),

e = distance de la circonférence du trou (11) à l'angle voisin des canaux.

9. Palier selon la revendication 2, caractérisé en ce qu'une pompe indépendante (16, 17) alimente en huile sous pression les canaux (par exemple 4 et 6 ainsi que 3 et 5) qui sont disposés en diagonale par rapport au centre de la surface de portée (2).

0 070 375

FIG. 1

FIG.2